# EUROPÄISCHE PATENTANMELDUNG

(11) **EP 3 321 918 A1**
(43) Veröffentlichungstag der Anmeldung: **16.05.2018**
(21) Anmeldenummer: 17201524.0
(22) Anmeldetag: 14.11.2017
(51) Int. Cl.: G09B 1/06, G09B 1/08, G09B 1/10, G09B 5/02, G09B 19/02, A63F 9/00

(54) **VORRICHTUNG ZUR LERNUNTERSTÜTZUNG**

(30) Priorität: 15.11.2016 DE 102016013911
(71) Anmelder: Lüth, Rainer, 24864 Brodersby (DE)
(72) Erfinder: Lüth, Rainer, 24864 Brodersby (DE)
(74) Vertreter: Klickow & Wetzel PartGmbB

(57) **Zusammenfassung**

Die erfindungsgemäße Apparatur dient zur Lernunterstützung und zum Testen der Fähigkeit von Testperson beispielsweise auf den Gebieten des räumlichen Sehens, der Koordination, der geometrischen und farblichen Wahrnehmung, der Mathematik oder der Rechtschreibung. Die Vorrichtung bietet durch ihren flexiblen Aufbau die Möglichkeit, den Lerngegenstand schnell und einfach zu wechseln und in seiner Komplexität anzupassen.

## Beschreibung

Die Erfindung betrifft eine Vorrichtung zur Lernunterstützung, die unter anderem dem Erlernen und dem Erfassen des räumlichen Sehvermögens und der räumlichen Koordinationsfähigkeit dient.

Bekannte Vorrichtungen zur Lernunterstützung im Bereich Sehvermögen und Koordinationsfähigkeit sind zum Beispiel in der Gestalt von Steck- und Setzspielzeug für Kleinkinder ausgelegt.

Für Kinder, in einem für Kindergärten und Vorschulen geeigneten Alter, fehlten jedoch bislang geeignete Vorrichtungen zur Lernunterstützung.

Aufgabe der Erfindung ist es, eine Vorrichtung bereitzustellen, um das räumliche Sehvermögen und die räumliche Koordinationsfähigkeit einer Testperson altersunabhängig zu ermitteln und zu trainieren.

Diese Aufgabe wird erfindungsgemäß dadurch gelöst, dass die Vorrichtung es ermöglicht, dass eine Testperson mit Aufgabenstellungen an verschiedenen Positionen in einem durch die Vorrichtung definierten Raum konfrontiert wird.

Diese Anforderungen können unterschiedlicher Komplexität und Art sein. Gedacht ist beispielsweise an das Einsetzen passender Formen in zugehörige Aussparungen oder Halterungen an verschieden Orten innerhalb der Vorrichtung, oder die Zuordnung von Objekten einer Farbe zu entsprechenden Aufnahmeeinrichtungen.

Eine weitere Aufgabe der Erfindung ist es, eine Vorrichtung zur Erreichung einer zusätzlichen Dimension in Lernprozessen zu schaffen, um so einen höheren Lernerfolg zu erreichen.

Gemäß der Erfindung wird diese Aufgabe dadurch gelöst, dass die entsprechenden Funktionalitäten auf verschiedene Orte innerhalb der Vorrichtung aufgeteilt werden. Dabei ist insbesondere an Aufgabenstellungen aus der Mathematik oder der Rechtschreibung gedacht. So können in einer Aufgabenstellung zum Erlernen mathematischer Operationen zum Beispiel die Operanden, der Operator und das Ergebnis in verschiedenen Ebenen angeordnet werden, um dem Gehirn bei der Wiederholung im Lernprozess neue Reize zu bieten.

Gemäß einer Ausführungsform der Erfindung ist es auch möglich, den Lernvorgang mit Bewegung zu verknüpfen.

Diese Option wird erfindungsgemäß dadurch realisiert, dass die verschiedenen Bestandteile des zu erlernenden Stoffes von der lernenden Person eigenhändig an den verschiedenen Orten innerhalb der Vorrichtung angeordnet werden können.

Eine mögliche Ausführungsform der erfindungsgemäßen Vorrichtung zur Lernunterstützung ist es, mehrere Ebenen aus einem Material parallel zueinander in einem definierten Raum zu positionieren. Dieser Raum kann beispielsweise als Würfel ausgeführt sein und ein durch die Kanten des Würfels ausgebildeter Rahmen kann als Träger für die Ebenen dienen. Die Ebenen können zum Beispiel aus Plexiglas gefertigt sein und Aussparungen einer bestimmten Form, passend zu einem zugehörigen Objekt, besitzen. Ziel einer möglichen Übung in dieser Ausführungsform ist es, die Objekte in die jeweils passende Aussparung zu stecken. Dafür muss die Testperson erkennen, in welcher Ebene die zu einem Objekt passende Aussparung liegt und das Objekt dann in die Aussparung stecken. Die Objekte und die zugehörigen Aufnahmen können zum Beispiel durch ihre Formen und/oder Farben einander zugeordnet sein. Somit wird zusätzlich zum räumlichen Sehen und der Koordinationsfähigkeit auch die geometrische und farbliche Wahrnehmungsfähigkeit des Probanden getestet und trainiert.

Eine weitere mögliche erfindungsgemäße Ausführungsform der Lernunterstützung ist es, die verschiedenen Ebenen und die Aussparungen der vorstehend beschriebenen Apparatur in nur zwei räumlichen Dimensionen umzusetzen. Dafür kann ein Material, wie zum Beispiel Papier, genutzt werden, auf dem durch eine Technik, beispielweise Bedrucken, eine perspektivische Darstellung der zuvor im dreidimensionalen Raum positionierten Aufnahmeorte in nur einer Ebene realisiert wird. Aufgabe könnte es für den Anwendungsfall der Lernunterstützung in der Rechtschreibung zum Beispiel sein, gemäß einer Vorlage, die für eine bestimmte Zeit sichtbar ist und mit dem Beginn der Lösung nicht mehr einsehbar ist, einzelne Buchstaben von Worten oder Sätzen den verschiedenen Orten und Ebenen zuzuordnen. Dies könnte durch das Legen von Objekten oder durch das handschriftliche Eintragen erfolgen.

Entgegen dem Stand der Technik kann mit der erfindungsgemäßen Vorrichtung zur Lernunterstützung sowohl die aktuelle Ausprägung des räumlichen Sehens, der räumlichen Koordinationsfähigkeit und der Geschicklichkeit altersunabhängig erfasst und trainiert werden. Des Weiteren ist die erfindungsgemäße Apparatur in bestimmten Ausführungsformen leicht umzukonfigurieren, um exemplarisch neben dem räumlichen Sehen und der Koordinationsfähigkeit auch das Erlernen von mathematischen Operationen oder der Rechtschreibung zu unterstützen.

Als Anwendung wird besonders an den Einsatz mit Kindern zum Beispiel in Vorschulen und Kindergärten zu Test- und Lernzwecken gedacht. Jedoch ist auch eine Nutzung in anderen Altersgruppen und Anwendungsgebieten denkbar. So könnte eine erfindungsgemäße Apparatur auch in der Medizin therapiebegleitend als Test- und Trainingsvorrichtung genutzt werden.

In den Zeichnungen sind beispielhafte Ausführungsformen der Erfindung schematisch dargestellt. Es zeigen:
- Fig. 1: eine perspektivische Ansicht der erfindungsgemäßen Apparatur mit drei Objekten verschiedener Formen und Farben in zwei Ebenen innerhalb der Vorrichtung,
- Fig. 2: eine perspektivische Seitenansicht der Vorrichtung mit drei Objekten verschiedener Formen und Farben, die in drei Ebenen positioniert sind,
- Fig. 3: eine frontale Ansicht der Apparatur mit drei Objekten verschiedener Formen und Farben platziert in drei Ebenen,
- Fig. 4: eine perspektivische Seitenansicht der Vorrichtung zur Lernunterstützung mit herausgearbeiteten Plattenebenen vorn und hinten,

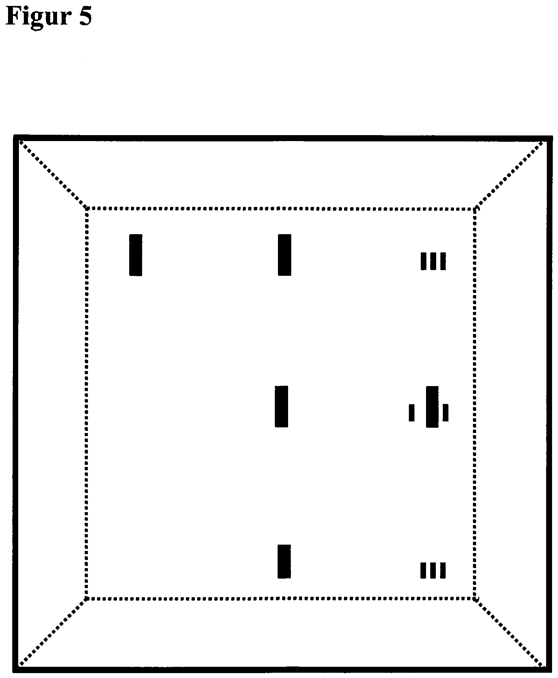

- Fig. 5: eine Variante zu Fig. 4,
- Fig. 6: eine frontale Ansicht der Apparatur mit neun Objekten drei verschiedener Farben in drei Ebenen,
- Fig. 7: eine perspektivische Darstellung der Vorrichtung mit eingehängten Objekten,
- Fig. 8: eine Ansicht der Lernvorrichtung von vorn. Die Objekte in den verschiedenen Ebenen sind mit Zahlen und mathematischen Operatoren gekennzeichnet,
- Fig. 9: eine perspektivische Seitenansicht der erfindungsgemäßen Apparatur mit durch Zahlen und mathematische Operatoren gekennzeichneten Objekten in drei Ebenen,

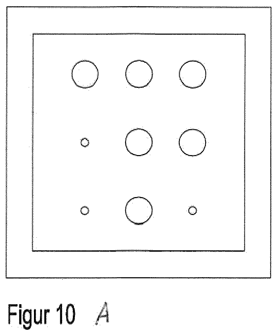

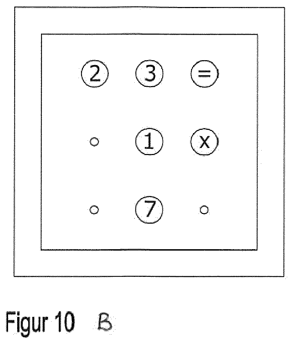

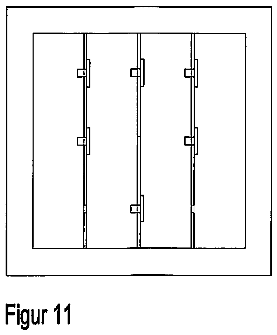

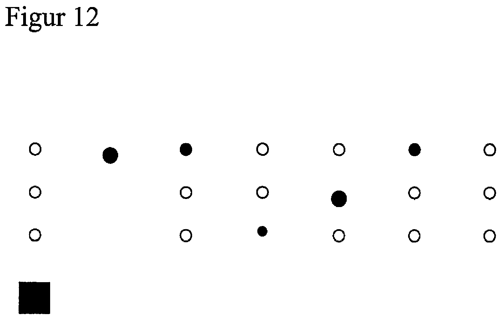

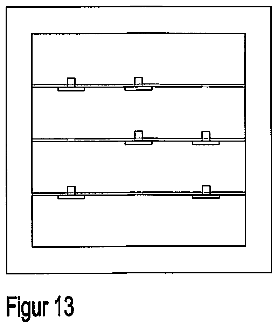

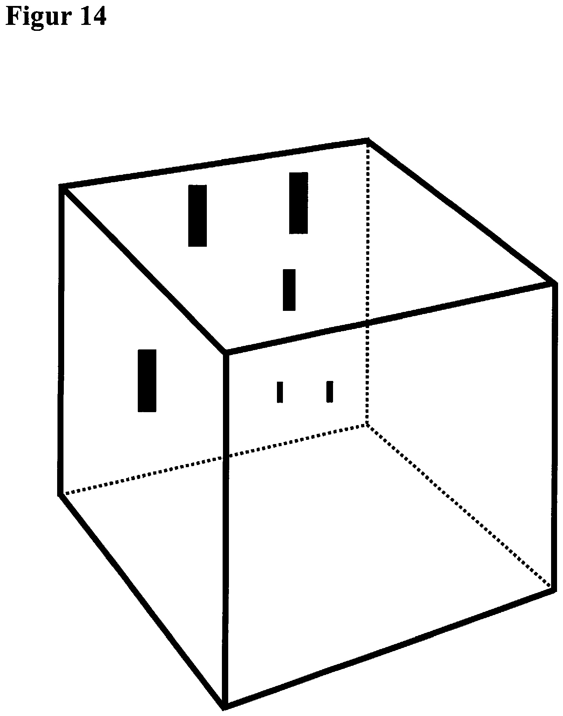

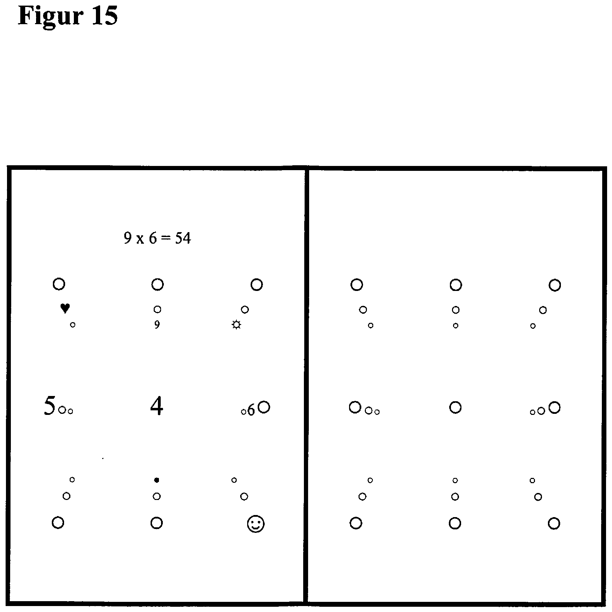

- Fig. 10 bis Fig. 15: weitere Darstellungen von Details,
- Fig. 16: eine frontale Ansicht einer Ausführungsform der erfindungsgemäßen Apparatur bestehend aus ineinander platzierten Kugeln verschiedener Größe,
- Fig. 17: eine Darstellung von Objekten verschiedener Farben und Formen platziert auf den Kugeloberflächen der Apparatur,

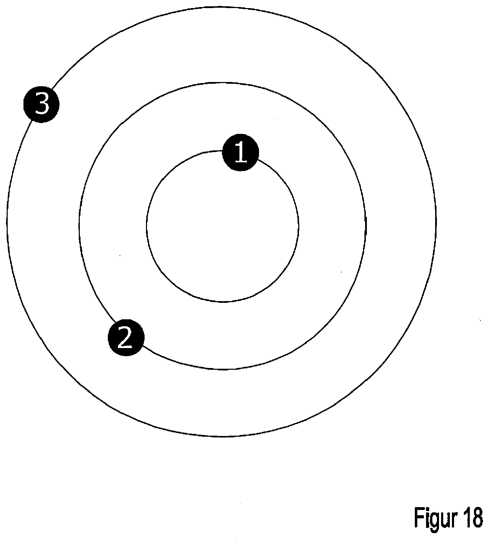

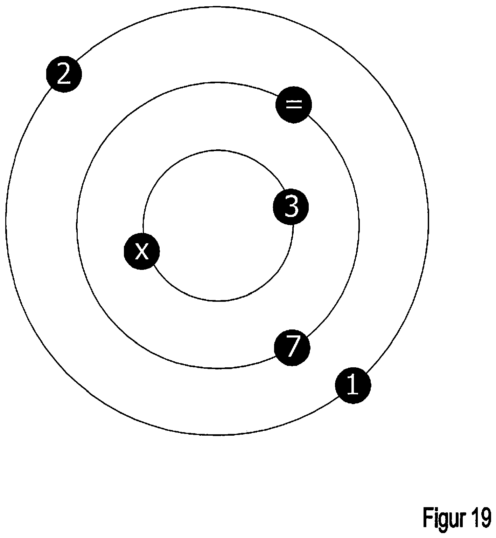

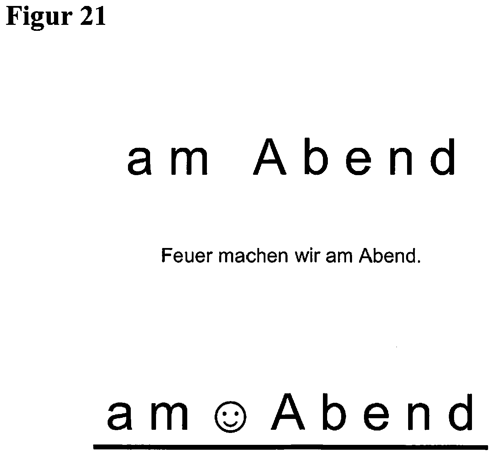

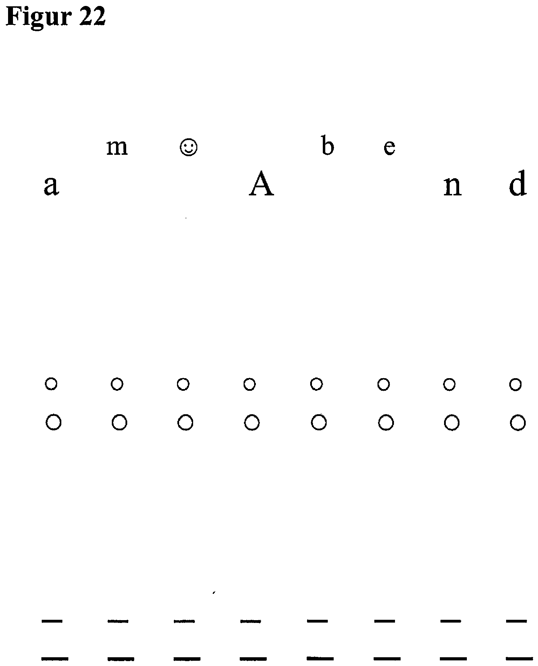

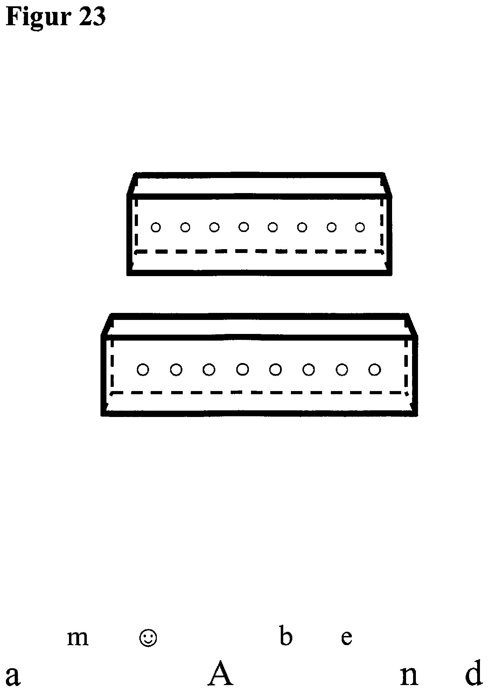

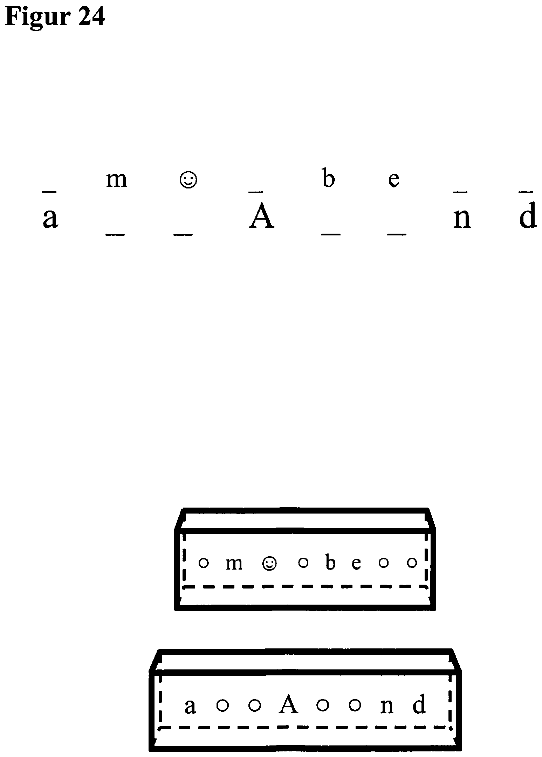

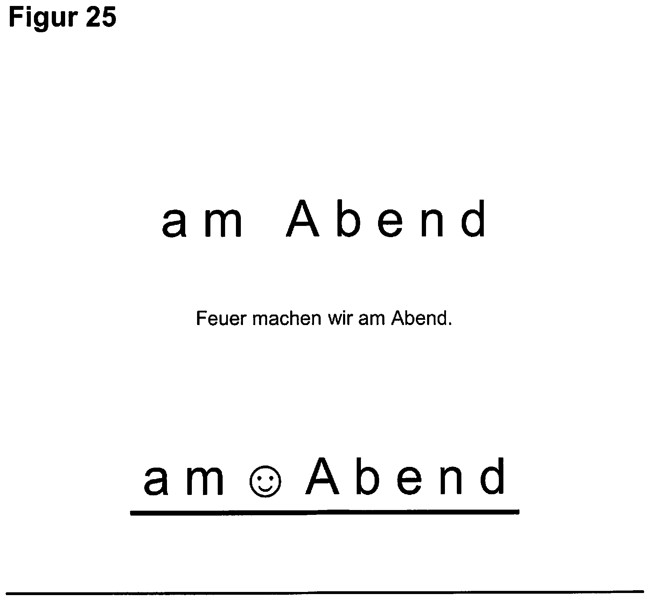

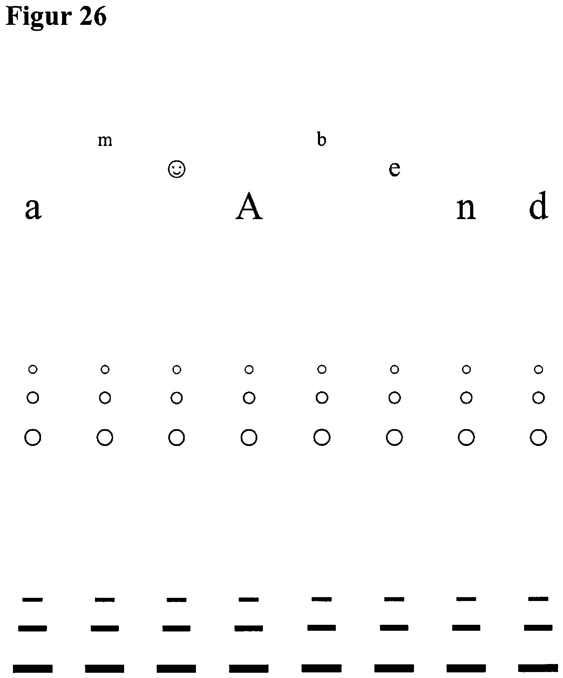

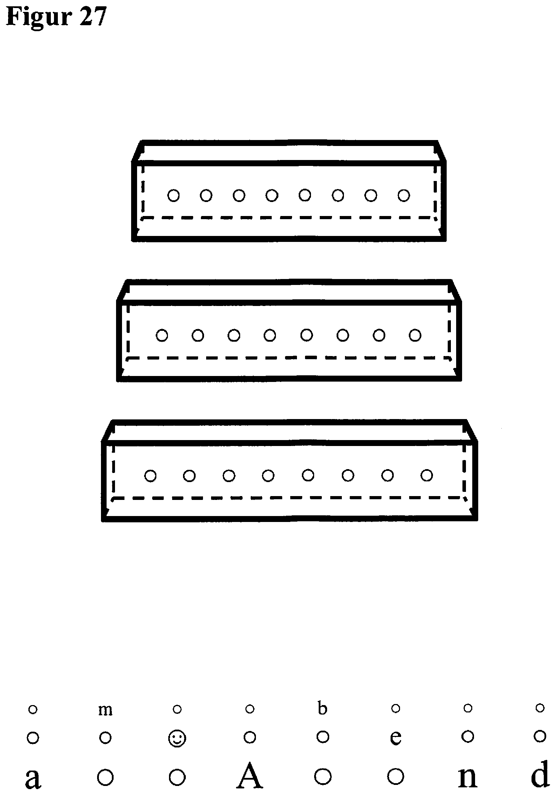

- Fig. 18 bis Fig. 27: weitere Darstellungen von Details,
- Fig. 28: eine frontale Ansicht einer Ausführungsform mit Quadern zur Realisierung der verschiedenen Aufnahmeebenen und Buchstaben zur Kennzeichnung der Objekte,
- Fig. 29: eine Ansicht einer Ausführungsform als bedrucktes Papier.

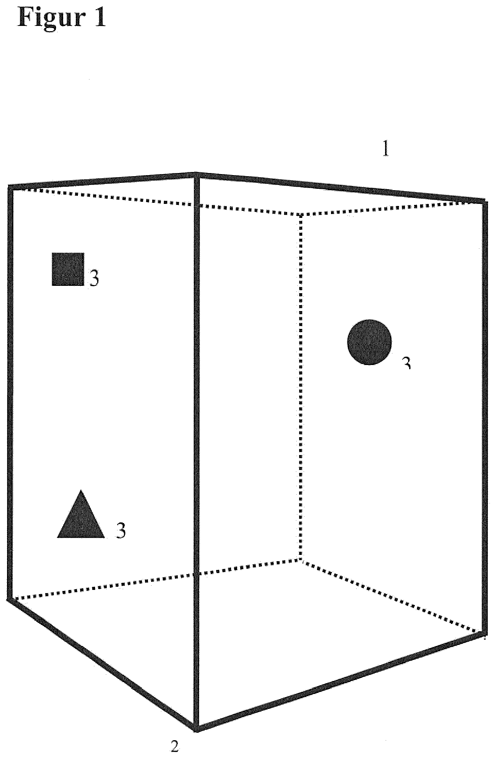

Figur 1 zeigt eine mögliche Ausführungsform der erfindungsgemäßen Vorrichtung zur Lernunterstützung (1). Dargestellt sind ein kubischer Rahmen (2), der die Apparatur räumlich begrenzt, und drei Objekte (3) verschiedener Formen und Farben. Der Rahmen kann als Tragelement für die weiteren Bestandteile der Apparatur dienen und kann aus Materialien wie zum Beispiel Kunststoff, Metall oder Holz gefertigt werden. Die Objekte können beliebiger Anzahl, Form und Farbe sein. Beispielhaft sind diese hier als grüner Fisch, roter Hase und gelbe Schnecke ausgeführt.

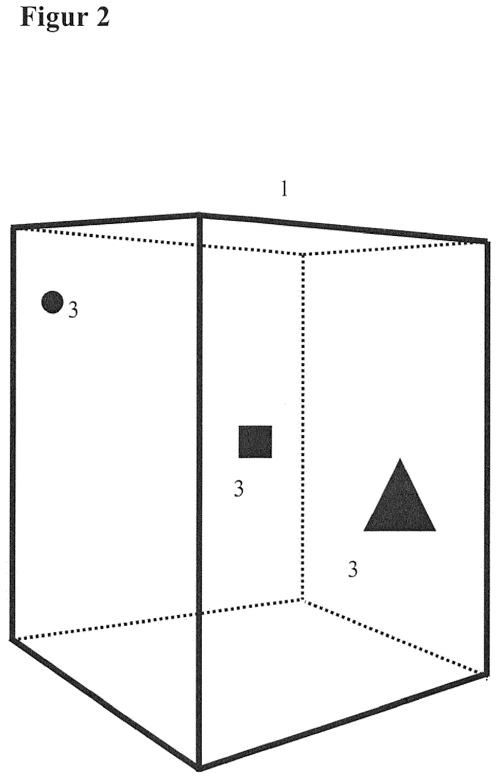

Figur 2 zeigt eine perspektivische Seitenansicht der Apparatur (1), aus der ersichtlich wird, dass die Objekte (3) innerhalb der Apparatur (1) in verschiedenen Ebenen angeordnet werden können. Beispielhaft sind in dieser Darstellung drei Ebenen ausgeführt: Eine vordere Ebene (4) eine mittlere Ebene (5) und eine hintere Ebene (6). Die Anzahl der Ebenen ist beliebig wählbar und die Objekte (3) können beliebig auf den Ebenen verteilt sein. Als weiteres Beispiel für die Ausführungsform der Objekte (3) sind hier verschiedenfarbige geometrische Formen gewählt. In der vorderen Ebene (4) ist ein rotes Quadrat, in der mittleren Ebene (5) ein grüner Kreis und in der hinteren Ebene (6) ein gelbes Dreieck positioniert. Die Ebenen (4-6) können beispielsweise durch Platten eines festen Materials oder auch durch Drahtgestelle oder Hängevorrichtungen definiert werden.

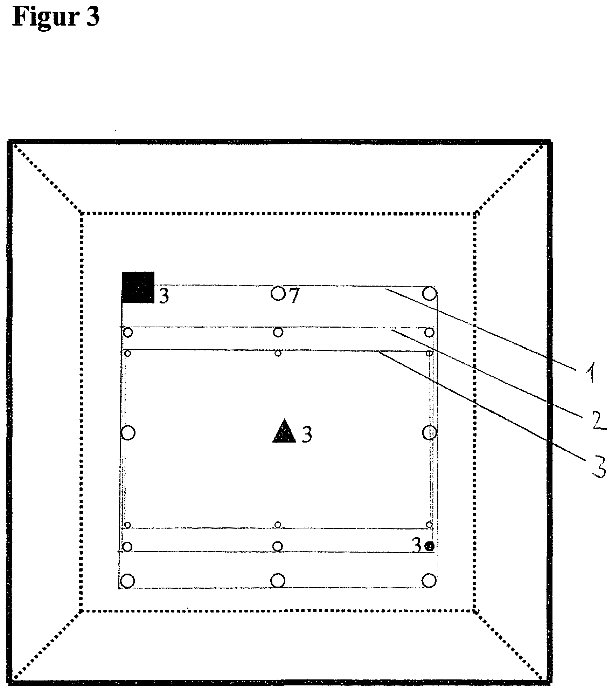

In Figur 3 ist die Apparatur (1) von vorne abgebildet. Es sind wieder drei Objekte (3) verschiedener Form und Farbe in drei Ebenen angeordnet. Die drei Ebenen sind in der gezeigten Ausführungsform aus Plexiglas ausgebildet und weisen jeweils neun kreisrunde Ausnehmungen (7) auf. Die Ausnehmungen (7) dienen als Aufnahme für die Objekte (3), die für diese Ausführungsform eine den Ausnehmungen (7) entsprechende Steckbarkeit aufweisen. Diese Steckbarkeit kann zum Beispiel durch einen in die Bohrung passenden Zapfen auf einer Seite der Objekte (3) erreicht werden. Die Anzahl der Ausnehmungen (7) kann beliebig gewählt werden und kann sich auch in horizontaler und vertikaler Richtung innerhalb der Ebenen unterscheiden. Auch von der kreisrunden Form abweichende Aussparungen (7), wie zum Beispiel Rechtecke oder Dreiecke sind denkbar. Neben dem beschriebenen Stecksystem zur Befestigung der Objekte (3) an den zugehörigen Aufnahmeorten (7) sind auch weitere Techniken, wie zum Beispiel magnetische Anhaftung und Klett-, Klemm- oder Saugverbindungen denkbar.

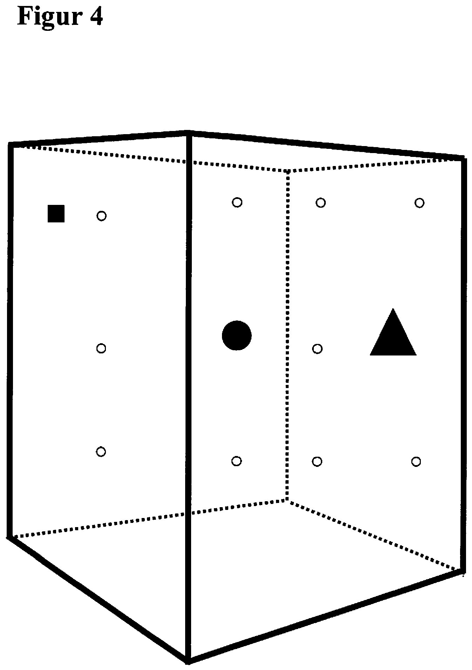

Figur 4 zeigt die Apparatur (1) in perspektivischer Ansicht von der Seite. Es sind die vordere (4) und die hintere Ebene (6) herausgearbeitet.

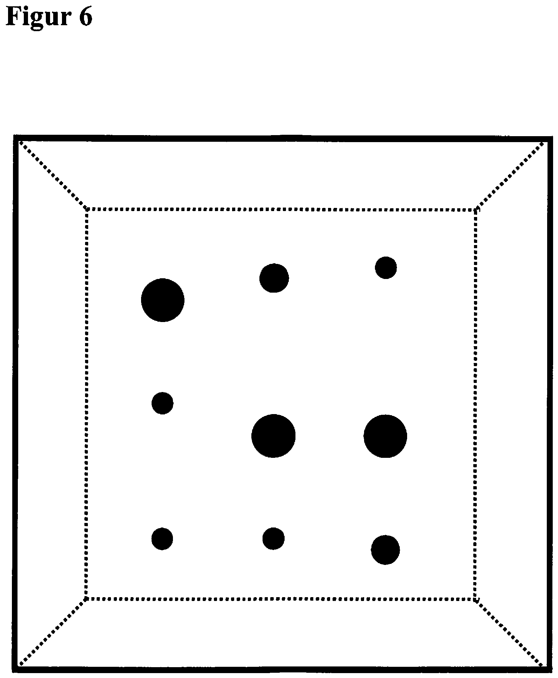

Figur 6 zeigt eine erfindungsgemäße Apparatur (1) mit neun Objekten (3) in drei Ebenen (4-6). Hier weisen die Objekte (3) die gleiche Form, aber verschiedene Farben auf.

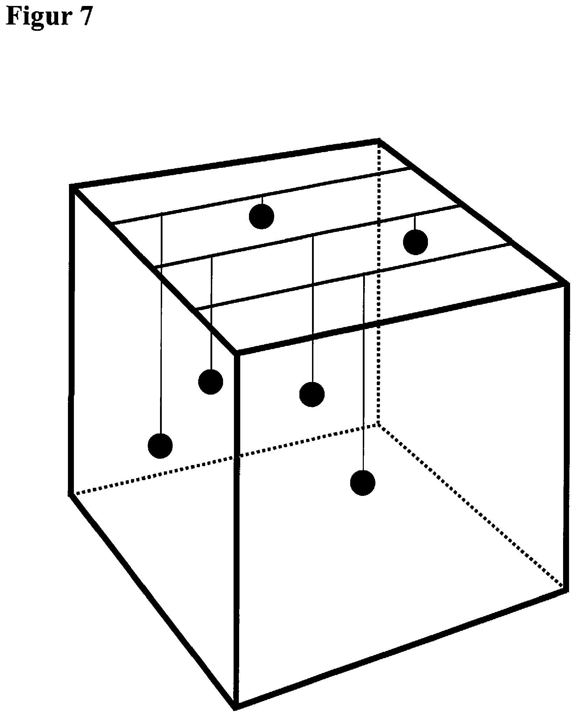

In Figur 7 ist eine erfindungsgemäße Vorrichtung (1) gezeigt, in der die verschiedenen Ebenen, in denen die Objekte positioniert werden können, durch gespannte Drähte (8) an der Oberseite des Rahmens (2) definiert werden. An diesen Drähten werden die Objekte (3) eingehängt. Die Länge der Aufhängung (9) bestimmt die Höhe des Objektes (3) in der jeweiligen Ebene. Die Aufhängung (9) kann beispielsweise mit einem an dem Objekt befestigten Draht realisiert werden. Denkbar ist auch eine Ausführungsform mit von den gespannten Drähten (8) auf der gesamten Höhe der Apparatur herabhängenden oder zu einer sich auf der Unterseite der Apparatur befindlichen Drahtkonstruktion äquivalent zu (8) gespannten Fäden oder Drähten, an denen die Objekte (3) beispielweise angeklemmt werden können.

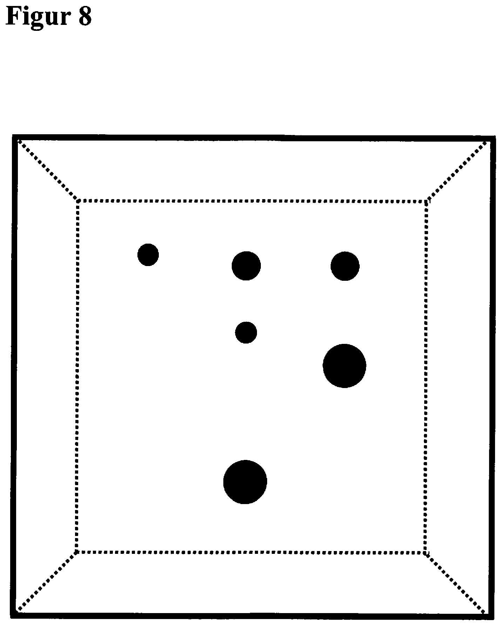

Figur 8 zeigt eine weitere Ausführungsform einer erfindungsgemäßen Vorrichtung (1). Die Objekte (3) sind hier mit verschiedenen Symbolen gekennzeichnet. In diesem beispielhaften Fall sind sechs Objekte (3) dargestellt. Einige der Objekte sind mit Zahlen (10) gekennzeichnet, während ein anderes Objekt mit einem mathematischen Operator (11) und ein weiteres Objekt mit einem Gleichzeichen (12) gekennzeichnet ist. Aus diesen Objekten (10-12) lässt sich nun in den verschiedenen Ebenen der Apparatur (1) eine mathematische Gleichung aufstellen und lösen. Denkbar ist es, dass die durch Symbole gekennzeichneten Objekte (3) sich zusätzlich in Farbe und Form unterscheiden. Diese zusätzlichen Eigenschaften können in der praktischen Anwendung der Zuordnung zu definierten Ebenen dienen.

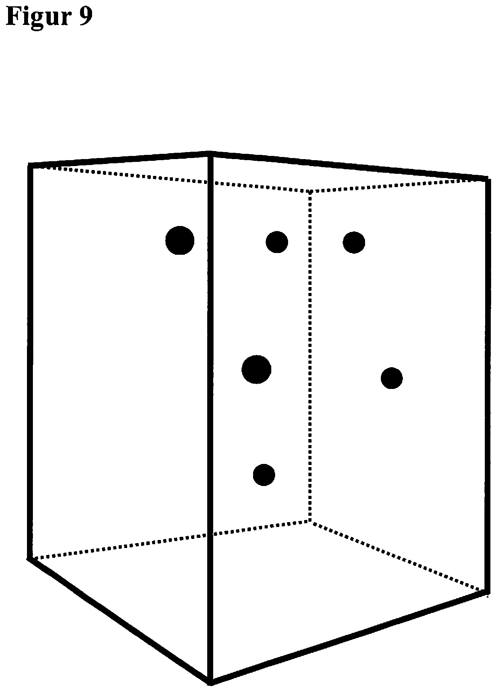

Figur 9 zeigt eine perspektivische Seitenansicht der aus Figur 8 bekannten Apparatur. Hier wird nun die Zuordnung der mit mathematischen Symbolen gekennzeichneten Objekte (3) zu der vorderen Ebene (4), der mittleren Ebene (5) und der hinteren Ebene (6) deutlich. In der vorderen Ebene (4) befinden sich ein Objekt (3) mit einer "3" darauf und ein Objekt (3) mit einem "X" als mathematischen Operator gekennzeichnet. In der mittleren Ebene (5) befindet sich ein Objekt (3) mit einer "7" und ein Objekt (3) mit einem Gleichzeichen. Das Ergebnis der in diesem Fall durch eine Multiplikation gegebenen Gleichung befindet sich durch ein Objekt (3) mit einer "2" und ein Objekt (3) mit einer "1" gekennzeichnet in der hinteren Ebene (6). Die Gleichung "3x7=21" wird in dieser Ausführungsform der erfindungsgemäßen Vorrichtung somit in drei Ebenen (4-6) im Raum gelöst.

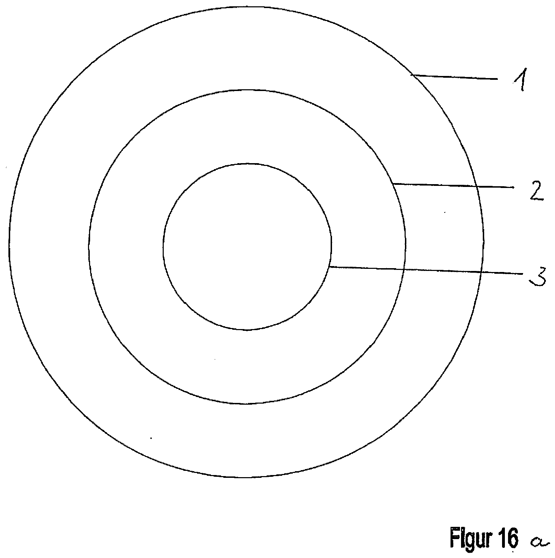

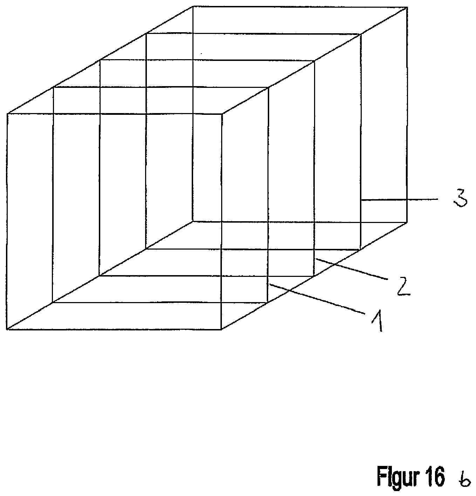

Figur 16 zeigt eine weitere mögliche Ausführungsform einer erfindungsgemäßen Apparatur (1). Die äußere Form ist nun durch eine Kugel gegeben. Die in der kubischen Ausführungsform definierten Ebenen werden hier durch die Oberflächen ineinander platzierter Kugeln verschiedener Durchmesser ersetzt. Zu sehen ist die Kugeloberfläche der kleinsten Kugel (13) im Zentrum der Apparatur (1), die Kugeloberfläche der Kugel mittlerer Größe (14) und die Kugeloberfläche der äußeren, größten Kugel (15). Die die jeweilige Kugeloberfläche aufspannenden Rahmen sind hier in grün (13), rot (14) und schwarz (15) eingefärbt. Die Farbgebung ist beliebig wählbar.

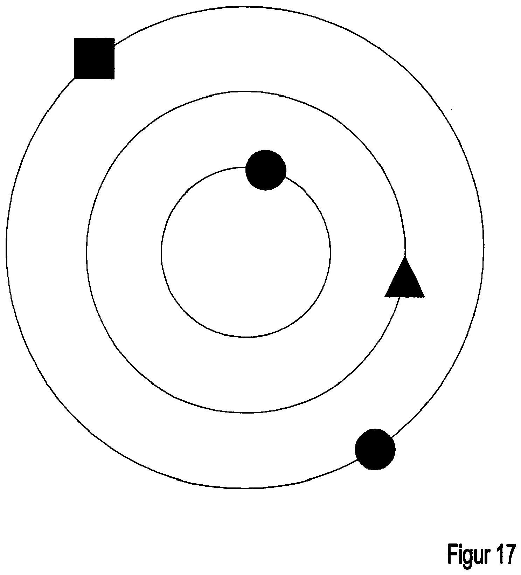

Figur 17 zeigt Objekte (3) verschiedener Formen und Farben, die auf den Kugeloberflächen angeordnet sind. Diese Zuordnung kann, wie im hier gezeigten Fall, über die Farbe erfolgen. Auch für die kugelförmige Ausführungsform können die Objekte (3) sich zum Beispiel in Form, Farbe und Kennzeichnung durch Symbole unterscheiden.

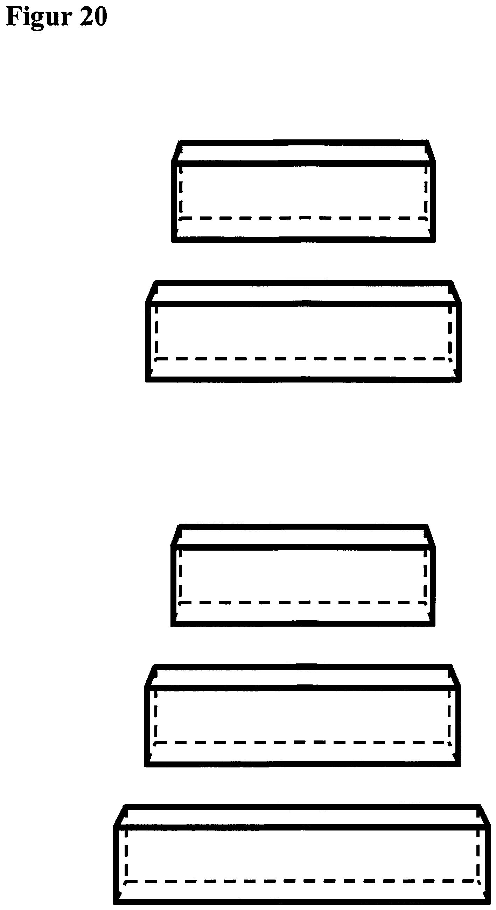

In Figur 20 wird eine Ausführungsform der Erfindung gezeigt, die es ermöglicht ohne Rahmen (2) auszukommen. Die verschiedenen Ebenen werden durch eigenständig standfähige Träger (16) realisiert. Diese Träger können zum Beispiel, wie hier gezeigt, als Quader ausgeführt sein. Die Träger (16) können sich in Farbe und Größe unterscheiden und verschiedene Möglichkeiten aufweisen, die Objekte (3) an ihnen zu befestigen. Es ist zum Beispiel daran gedacht, die Objekte in Bohrungen (7) in den Trägern (16) stecken zu können.

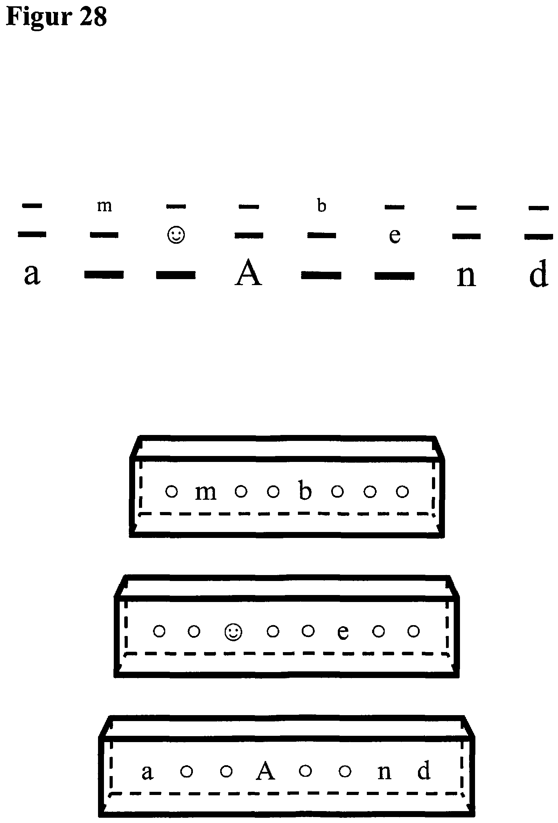

Figur 28 zeigt Objekte (3), die durch Buchstaben gekennzeichnet sind. Aus diesen Objekten lassen sich Worte oder ganze Sätze zusammenstellen. Weiterhin unterscheiden sich die Buchstaben in Großbuchstaben (17) und Kleinbuchstaben (18). Auch können sich die durch Buchstaben gekennzeichneten Objekte (3) in Form und Farbe unterscheiden. In der gezeigten Ausführungsform sind einige der mit Buchstaben gekennzeichneten Objekte (3) in grüner Farbe und andere in roter Farbe ausgeführt. Diese Farbunterscheidung lässt eine Zuordnung auf die verschiedenen Träger (16) zu, die sich wiederum in verschieden Ebenen positionieren lassen.

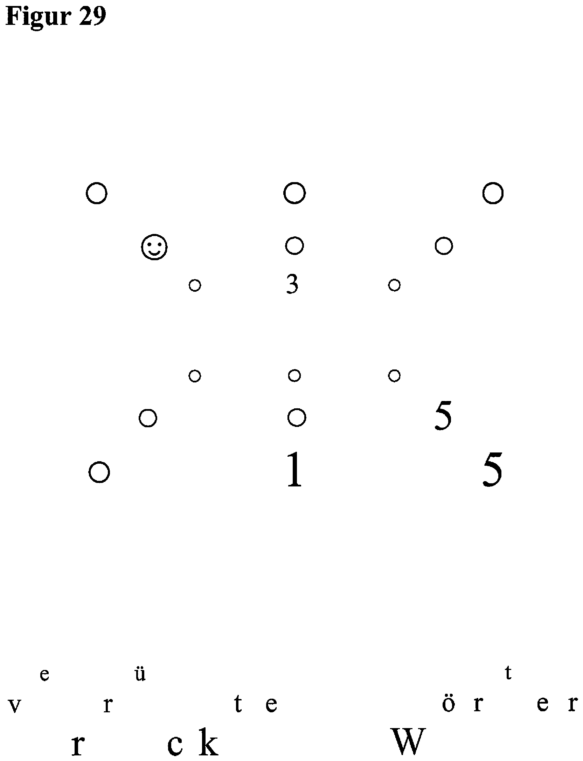

In Figur 29 wird eine mögliche zweidimensionale Ausführungsform der erfindungsgemäßen Lernunterstützung gezeigt. Dies kann beispielsweise durch bedrucktes Papier umgesetzt werden. In perspektivischer Darstellung werden die in den Apparaturen (1) mechanisch ausgeführten Aufnahmen (7), die an bestimmten Orten innerhalb der Apparatur (1) positioniert sind, nun durch auf das Papier gedruckte Formen (19) in nur zwei räumlichen Dimensionen realisiert. Diese Formen (19) können wie in der gezeigten Ausführungsform als Kreise ausgeführt sein, jedoch sind auch andere Formen möglich. Die Formen (19) können verschiedene Farben haben, die sie einer Ebene (4-6) zuordnen.

Die verschiedenen Ebenen (4-6) werden auch durch die perspektivische Anordnung der Formen (19) definiert. In der hier gezeigten Ausführungsform ist als Darstellungsform die Zentralperspektive gewählt. Diese ermöglicht im Zentrum nur die Darstellung einer Form (19) in der vorderen Ebene (4). Daher sind in der gezeigten Figur insgesamt 25 kreisrunde Formen (19) vorhanden, während eine äquivalente Apparatur (1) in kubischer Ausführung mit drei Ebenen (4-6) und jeweils neun regelmäßig positionierten Aufnahmen (7) 27 davon aufweist. Auch an andere Perspektiven in der Darstellung ist gedacht, um weitere Möglichkeiten, wie die vollständige Abbildung aller Aufnahmen (7) aus einer aus mehreren Ebenen (4-6) bestehenden Apparatur (1) zu realisieren.

In dieser Ausführungsform sind Aufgabenstellung (20) und Lösung (21) auf verschiedenen Blättern dargestellt. Es ist auch an die Darstellung von Aufgabe (20) und Lösung (21) auf nur einem Blatt Papier gedacht. Die Aufgabenstellung zeigt hier eine Darstellung der mathematischen Gleichung "9x6=54". Die einzelnen Zahlen und der Operator der Gleichung sind die Objekte (3) und werden gemäß ihrer Funktion in der Gleichung den durch die perspektivische Anordnung und ihre Farben definierten Ebenen (3-4) zugeordnet.

Innerhalb der jeweiligen Ebene (4-6) ist jedes Objekt (3) einer bestimmten Position zugeordnet, die durch die kreisrunde Form (19) markiert ist. Die "9" und der Operator "x" sind der blauen Ebene zugeordnet, die die hintere Ebene (6) darstellt. Die "6" ist der mittleren, roten Ebene (5) zugeordnet, während das Ergebnis der Gleichung, die "54" der vorderen, grünen Ebene (3) zugeordnet ist. Dies kann durch Bedrucken des Papieres fest erfolgen. Zusätzlich sind in der gezeigten Ausführungsform noch weitere Objekte (3) mit Symbolen in der Aufgabenstellung (20) enthalten, um den Schwierigkeitsgrad zu erhöhen. Hier sind eine Sonne der blauen Ebene, ein Herz der roten Ebene und ein Smiley der grünen Ebene zugeordnet.

Die Lösung (21) der Aufgabenstellung (20) wird nun dadurch erreicht, dass die Objekte (3) aus der Aufgabenstellung (20) auf dem Lösungsbogen den entsprechenden Positionen (19) in den verschiedenen Ebenen (4-6) zugeordnet werden. Dies kann zum Beispiel durch handschriftliche Eintragung der lernenden Person oder durch das Legen von physikalischen Objekten (3), die mit den jeweiligen Ziffern oder Symbolen gekennzeichnet sind, erfolgen.

Eine erfindungsgemäße Ausführungsform der vorgestellten Vorrichtung lässt sich somit durch die Austauschbarkeit von Objekten (3), die sich zum Beispiel in Form, Farbe, Größe und Kennzeichnung mit Buchstaben oder mathematischen Symbolen unterscheiden, und die Modifikation der Anzahl, der Farbe oder der Position der Ebenen, Träger oder Kugeloberflächen schnell und einfach in seiner Komplexität und der Art des zu Erlernenden oder zu Testenden anpassen. Zudem ist durch die Möglichkeit der Ausführung als Druck auf Papier eine sehr preisgünstige Variante darstellbar.

Eine weitere Realisierung der erfindungsgemäßen Vorrichtung kann durch Anwendung auf einem Personalcomputer, einem Tablet oder einem Smartphone erfolgen. Die erfindungsgemäße Vorrichtung würde hierbei in Form einer Visualisierung programmiert werden und der Benutzer führt dann die Zuordnung der visualisierten Ausnehmungen und der zugeordneten Objekte durch entsprechende Bedienoperationen durch. Die entsprechende Anwendung kann beispielsweise auf der Datenverarbeitungseinrichtung fest installiert sein, beispielsweise über eine CD-ROM oder über einen Download, alternativ ist auch eine Realisierung als Onlinespiel möglich.

## Patentansprüche

1. Vorrichtung zur Lernunterstützung (1), die eine Ausbildung zur Anpassung an die Art des Lerngegenstandes und die Komplexität des Lerngegenstandes aufweist.

2. Vorrichtung (1) nach Anspruch 1, **dadurch gekennzeichnet, dass** der Lerngegenstand durch die Eigenschaften von in der Apparatur positionierbaren Objekten (3) und dem Aufbau der Apparatur bestimmt wird.

3. Vorrichtung (1) nach Anspruch 1 und 2, **dadurch gekennzeichnet, dass** die Komplexität durch die Anzahl der Eigenschaften der Objekte (3) anpassbar ist.

4. Apparatur (1) nach Anspruch 1, **dadurch gekennzeichnet, dass** der Lerngegenstand durch den Einsatz verschieden ausgeprägter Objekte (3) modifizierbar ist.

5. Vorrichtung (1) nach Anspruch 1, **dadurch gekennzeichnet, dass** die eine räumliche Komponente in den Lernprozess dadurch einbringbar ist, dass die Aufgabenstellungen auf verschiedene Orte innerhalb der Apparatur (1) aufgeteilt sind.

6. Vorrichtung (1) nach den Ansprüchen 1 bis 5, **dadurch gekennzeichnet, dass** eine räumliche Komponente durch die Anordnung mehrerer paralleler Ebenen (4-6) entsteht, die Aufnahmemöglichkeiten (7) für die positionierbaren Objekte (3) bereitstellen.

7. Vorrichtung (1) nach den Ansprüchen 1 bis 5, **dadurch gekennzeichnet, dass** eine räumliche Komponente durch die Anordnung verschieden großer Kugeln (13-15) ineinander erfolgt, deren durch ein Gestell aufgespannte Kugeloberflächen die Aufnahme von Objekten (3) ermöglichen.

8. Vorrichtung nach den Ansprüchen 1 bis 4, **dadurch gekennzeichnet, dass** eine perspektivische Darstellung durch mehrere Ebenen (4-6) zweidimensional realisiert ist.

9. Vorrichtung nach den Ansprüchen 1 bis 4 und 8, **dadurch gekennzeichnet, dass** eine Ausbildung durch Druck auf Papier realisiert ist.

10. Vorrichtung nach einem der Ansprüche 1 bis 9, **dadurch gekennzeichnet, dass** zur Unterstützung einer Positionierung der Objekte (3) ein Rahmen (2) verwendet ist.

11. Vorrichtung nach Anspruch 10, **dadurch gekennzeichnet, dass** der Rahmen (2) eine kubische Gestaltung aufweist.

12. Vorrichtung nach einem der Ansprüche 1 bis 11, **dadurch gekennzeichnet, dass** vom Rahmen (2) mindestens drei transparente Objekte (4, 5, 6) gehaltert sind.

13. Vorrichtung nach Anspruch 12, **dadurch gekennzeichnet, dass** mindestens eines der transparenten Objekte (4, 5, 6) mindestens eine Ausnehmung (7) aufweist.

14. Vorrichtung nach Anspruch 13, **dadurch gekennzeichnet, dass** die Ausnehmung (7) eine an mindestens eines der Objekte (3) angepasste Formgebung aufweist.

15. Vorrichtung nach Anspruch 13, **dadurch gekennzeichnet, dass** die Ausnehmung (7) eine an mindestens eines der Objekte (3) angepasste Farbgebung aufweist.
